# EUROPEAN PATENT SPECIFICATION

(11) **EP 1 894 830 B1**
(45) Date of publication and mention of the grant of the patent: **14.07.2010**
(21) Application number: 07253404.3
(22) Date of filing: 29.08.2007
(51) Int. Cl.: B62K 25/08, F16F 9/32

(54) **Shock absorber**
Stoßdämpfer
Amortisseur

(30) Priority: 31.08.2006 JP 2006236505; 20.06.2007 JP 2007163032
(43) Date of publication of application: 05.03.2008
(73) Proprietor: Yamaha Hatsudoki Kabushiki Kaisha, Iwata-shi, Shizuoka-ken 438-8501 (JP)
(72) Inventor: Iizuka, Toshio, Shizuoka-ken 438-8501 (JP)
(74) Representative: Lamb, Martin John Carstairs

(56) References cited:
- DE-U1-202005 002 541
- JP-A- 61 186 500
- JP-A- 2005 282 589
- US-A- 4 138 132
- US-A1- 2005 051 993

## Description

### FIELD OF THE INVENTION

The present invention relates to a shock absorber having an outer tube, a straddle type vehicle having the shock absorber and a manufacturing method for the shock absorber.

### BACKGROUND TO THE INVENTION

In straddle type vehicles such as, for example, motorcycles, a shock absorber for absorbing shocks received by a wheel (for example, a front wheel) is widely used. As a shock absorber used as a front fork of a straddle type vehicle, there exist a normal stand type fork in which a generally cylindrical outer tube is disposed below an inner tube, and a reverse stand type fork in which an outer tube is disposed above an inner tube.

In order to enhance weather resistance of such a shock absorber used as the front fork of the straddle type vehicle, a method for anodizing (alumite treatment) onto an outer surface of the outer tube is known, for example from JP-A-Sho 61-186500 upon which the preamble of claim 1 is based.

Also, generally, in the reverse stand type fork, cutting may be made onto an outer surface of the inner tube, and a brake caliper and/or a front fender (mud guard) for the front wheel may be attached to the inner tube.

Another method is also known in which to produce the appearance of a reverse stand type fork, a normal stand type fork having an outer tube whose outer surface is worked by cutting is used, a separate bracket is attached to the outer tube, and the brake caliper and/or the front fender are attached to the bracket.

However, the conventional shock absorber described above has the following problem. That is, the method in which the normal stand type fork having the outer tube whose outer surface is worked by cutting is used and the separate bracket is attached to the outer tube requires a two-piece structure which includes the outer tube and the separate bracket. Accordingly, the method raises the problem of increased manufacturing costs.

Therefore, the present invention is made under the circumstances and aims to provide a shock absorber having an exterior that looks like a two-piece structure formed with an outer tube and a separate bracket but without using the separate bracket, a straddle type vehicle having the shock absorber and a manufacturing method for the shock absorber.

### SUMMARY OF THE INVENTION

According to a first aspect of the present invention, there is provided a shock absorber comprising a cylindrical outer tube, wherein
the outer tube includes:
a first cylindrical part having an outer surface exhibiting a first surface roughness; and
a second cylindrical part having outer surface exhibiting a second surface roughness greater than the first surface roughness,
wherein the first part and the second part neighbour each other in a longitudinal direction of the outer tube; and
and wherein the second part has an equipment attaching section adapted to permit a piece of equipment to be attached thereto.

At least a portion of the outer surface of the second part may be subjected to shot blasting treatment. A cutting process may be performed on at least a portion of the outer surface of the first part. It should be understood that the cutting process alters the surface finish of the treated surface, and may include machining, hand treating, etching or the like, or any other suitable process.

The equipment attaching section may be adapted to permit a brake caliper of a disk type brake to be attached thereto. The equipment attaching section may be adapted to permit a mud guard to be attached thereto.

At least a portion of the outer surface of the outer tube may be anodized. At least a portion of the outer surface of the outer tube may be treated with black alumite.

According to a second aspect of the present invention, there is provided a manufacturing method for a shock absorber having a cylindrical outer tube, comprising:
a step of casting the outer tube;
a step of shot blasting an outer surface of the outer tube; and
a step of performing a cutting process on a portion of the outer surface of the outer tube thereby producing the image of separate sections.

The manufacturing method may further comprise a step of anodizing at least a portion of the outer surface of the outer tube. The step of anodizing may be performed after the step of cutting.

The manufacturing method may comprise the step of treating at least a portion of the outer surface of the outer tube with black alumite.

At least a portion of the outer tube may be formed with an equipment attaching section adapted to permit a piece of equipment to be attached thereto. The equipment attachment section may be formed on a portion of the outer tube on which the cutting process is not performed.

According to the shock absorber described above, the first part has less outer surface roughness and more luster than the second part. Also, the second part has the equipment attaching section to which the piece of equipment, such as a brake caliper, is attached. Therefore, the shock absorber can have the exterior that looks like the two-piece structure formed with the outer tube and a separate bracket without using the separate bracket.

In addition, if the shock absorber is used as the normal stand type fork, the shock absorber can produce the image of the inner tube of the reverse stand type fork because the first part of the outer tube has more luster than the second part. That is, although using the normal stand type fork, the image of the reverse stand type fork can be produced.

Shot blasting may be made onto the outer surface of the second part.

Cutting may be made onto the outer surface of the first part.

A brake caliper of a disk type brake may be attached to the equipment attaching section.

A mud guard may be attached to the equipment attaching section.

Anodization may be made onto an outer surface of the outer tube including the first part and the second part.

The anodization may be black alumite treatment.

According to a third aspect of the present invention, there is provided the above-mentioned a straddle type vehicle having the shock absorber according to first or second aspect, respectively.

The shock absorber of the straddle-type vehicle may include an axle supporting section for supporting an axle of a front wheel. The first cylindrical part of the outer tube may be formed between an upper second part and a lower second part and the axle supporting section may be positioned lower than the lower second part.

According to the features of the present invention, a shock absorber is provided which has an exterior that looks like a two-piece structure formed with an outer tube and a separate bracket without using the separate bracket. Also, a straddle type vehicle having the shock absorber and a manufacturing method for the shock absorber can be provided.

### BRIEF DESCRIPTION OF THE DRAWINGS

These and other aspects of the present invention will now be described, by way of example only, with reference to the accompanying drawings, in which:
FIG. 1 is a left side elevational view of a motorcycle constructed in accordance with an embodiment of the present invention;
FIG. 2 is a front elevational view of the motorcycle constructed in accordance with an embodiment of the present invention;
FIG. 3 is a side elevational view of a shock absorber constructed in accordance with the embodiment of the present invention;
FIG. 4 is a front elevational view of the shock absorber constructed in accordance with the embodiment of the present invention; and
FIG. 5 is a manufacturing work flowchart for the shock absorber constructed in accordance with the embodiment of the present invention.

### DETAILED DESCRIPTION OF THE DRAWINGS

Description will be hereinafter made of an embodiment of a straddle-type vehicle according to the present invention with reference to the drawings. In the following description of the drawings, the same or similar portions are assigned with the same or similar reference symbols. It should be noted that each drawing is a schematic diagram, and may represent different dimensional ratios and the like from those of the actual vehicle.

Hence, specific dimensions and the like should be determined in consideration of the following descriptions. Furthermore, as a matter of course, different drawings include elements which have different dimensional relations and ratios.

### Overall Outline of Structure

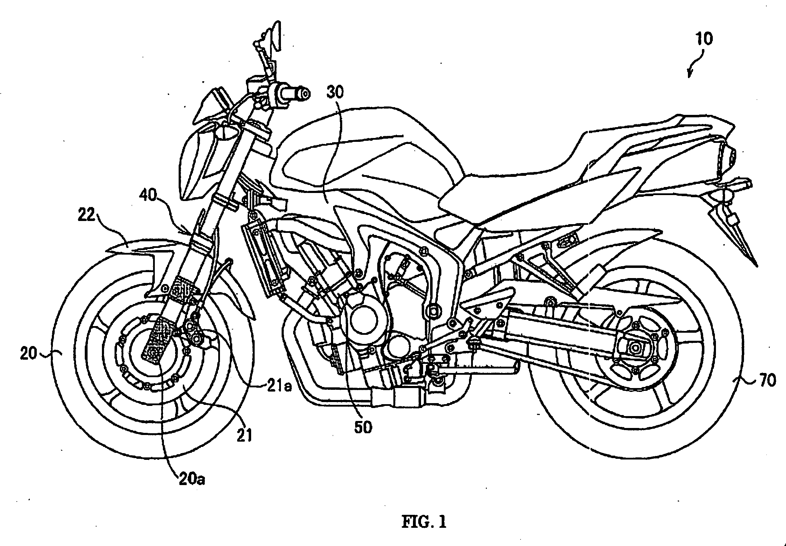

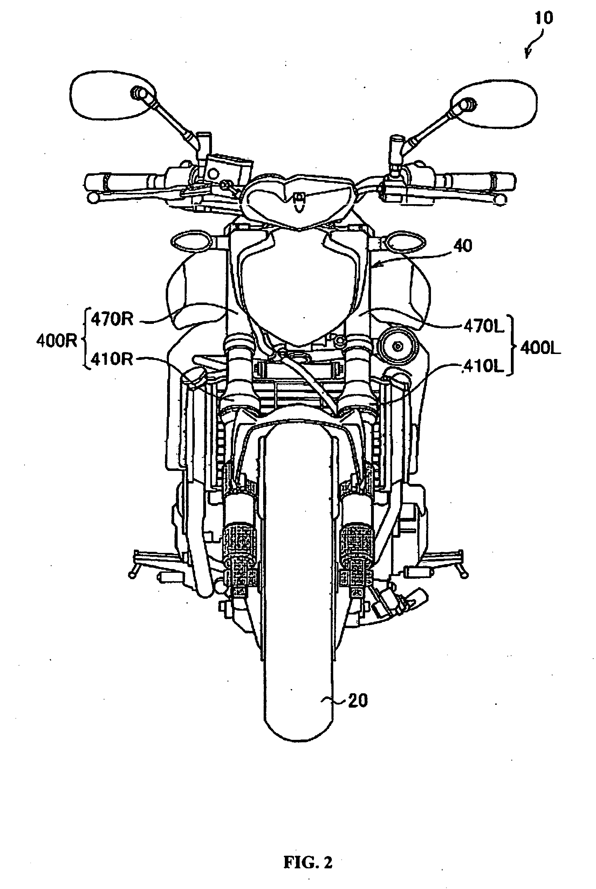

FIG. 1 is a left side elevational view of a motorcycle 10 which is a straddle type vehicle constructed in accordance with the present invention. FIG. 2 is a front view of the motorcycle 10.

As shown in FIGs . 1 and 2, the motorcycle 10 has a front wheel 20 and a rear wheel 70. The driving force generated by an engine 50 drives the rear wheel 70.

A front fork 40 supports the axle 20a of the front wheel 20 for rotation. The front fork 40 is coupled with a steering shaft (not shown). A vehicle frame 30 supports the steering shaft for pivotal movement.

The front fork 40 is a shock absorber provided for the motorcycle 10. The front fork 40 moves (reciprocal movement) the front wheel 20 in a vertical direction (actually, in a direction with a certain caster angle) in response to changes of road conditions to absorb shocks which the front wheel 20 receives.

As shown in FIG. 2, the front fork 40 is formed with a left side fork member 400L and a right side fork member 400R. The left side fork member 400L is formed with a cylindrical outer tube 410L and a cylindrical inner tube 470L. Similarly, the right side fork member 400R is formed with a cylindrical outer tube 410R and a cylindrical inner tube 470R.

That is, the front fork 40 is a normal stand type fork in which the outer tubes 410L, 410R are positioned below the inner tubes 470L, 470R.

The motorcycle 10 has a front disk brake 21 which is a disk type brake for braking the front wheel 20. A brake caliper 21a forming the front disk brake 21 is attached to the front fork 40.

Also, the motorcycle 10 has a front fender 22 (mud guard) preventing mud or the like raised by the front wheel 20 from scattering. The front fender 22 is attached to the front fork 40.

### Structure of Shock absorber

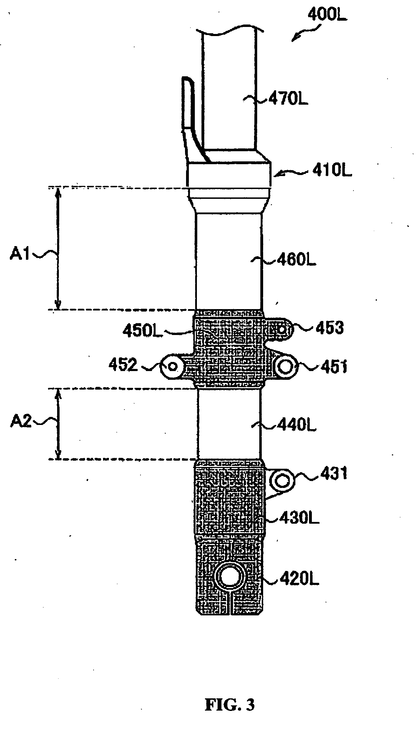

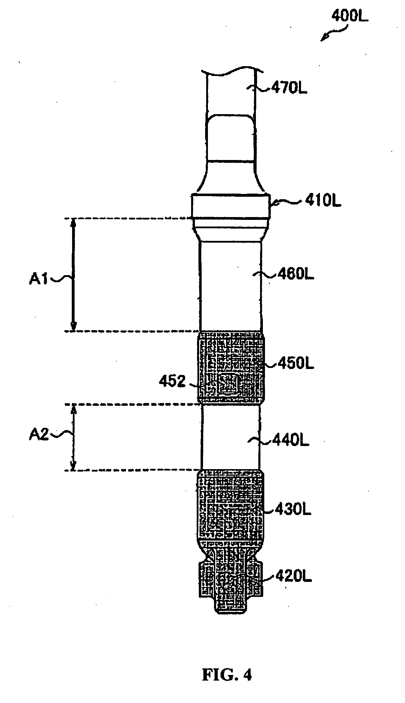

Referring now to FIGs. 3 and 4, a specific structure of the front fork 40 forming the shock absorber of this embodiment will be described. FIG. 3 is a side elevational view of the left side fork member 400L forming the front fork 40. FIG. 4 is a front elevational view of the left side fork 400L.

The left side fork 400L is formed with the outer tube 410L and the inner tube 470L. As described above, the outer tube 410L is positioned below the inner tube 470L.

In this embodiment, the outer surface of the outer tube 410L is anodized. Specifically, the outer surface of the outer tube 410L is treated with black alumite.

The outer tube 410L is formed with an axle supporting section 420L, a large diameter section 430L, a small diameter section 440L, a large diameter section 450L and a small diameter section 460L.

The axle supporting section 420L supports the axle 20a (FIG. 1) for rotation. The large diameter section 430L is positioned above the axle supporting section 420L. The small diameter section 440L is positioned above the large diameter section 430L.

Further, the large diameter section 450L is positioned above the small diameter section 440L. The small diameter section 460L is positioned above the large diameter section 450L. The small diameter sections 440L, 460L and the large diameter sections 430L, 450L are of a cylindrical shape.
the front fork 400L is produced such that the small diameter sections 430L, 450L have an outer surface roughness less than that of the large diameter sections 430L, 450L. In this embodiment, the small diameter sections 440L, 460L form a first part. Specifically, the outer surfaces of the small diameter sections 440L, 460L are worked by a cutting process, such as by machining, hand working, etching or the like. More specifically, a cutting process is undertaken in areas A1 and A2 identified in FIGs. 3 and 4. Since the cutting process is undertaken on the outer surfaces of the small diameter sections 440, 460L, these sections 440, 460L have more luster than the large diameter sections 430L, 450L.

The large diameter sections 430L, 450L have outer diameters larger than those of the small diameter sections 440L, 460L. Unlike the small diameter sections 440L, 460L, no cutting is made on the large diameter sections 430L, 450L. That is, the large diameter sections 430L, 450L have greater outer surface roughness and less luster than the small diameter sections 440L, 460L. In this embodiment, the large diameter sections 430L, 450L form a second part.

Accordingly, the first part and the second part neighbour each other in a longitudinal direction of the left fork member 400L. Specifically, the small diameter section 440L (first part) neighbours the large diameter section 430L (second part) and is positioned above the large diameter section 430L. The large diameter section 450L (second part) neighbours the small diameter section 460L (first part) and is positioned below the small diameter section 460L.

That is, the small diameter section 440L is positioned between the large diameter section 450L that is an upper second part and the large diameter section 430L that is a lower second part. The axle supporting section 420L is positioned further lower than the large diameter section 430L.

The outer surfaces of the large diameter sections 430L, 450L are treated by shot blasting. Therefore, the outer surfaces of the large diameter sections 430L, 450L have more roughness and apparently have less luster than those of the small diameter sections 440L, 460L which are cut or machined.

Because the outer surfaces of the outer tubes 410L are treated with black alumite, the outer surfaces have a mat black exterior, compared to the small diameter sections 440, 460L.

The large diameter section 430L has a brake caliper attaching section 431. Also, the large diameter section 450L has another brake caliper attaching section 451. The brake caliper 21a (see FIG. 1) is attached to the brake caliper attaching sections 431, 451. In this embodiment, the brake caliper attaching sections 431, 451 together form an equipment attaching section.

The large diameter section 450L also has fender attaching sections 452, 453. The front fender 22 (see FIG. 1) is attached to the fender attaching sections 452, 453. In this embodiment, the brake caliper 21a and the front fender 22 form pieces of equipment.

Although FIGs. 3 and 4 are side and front elevational views respectively of the left fork 400L, the right side fork member 400R also has a similar configuration to the left side fork member 400L.

### Manufacturing Method for Shock Absorber

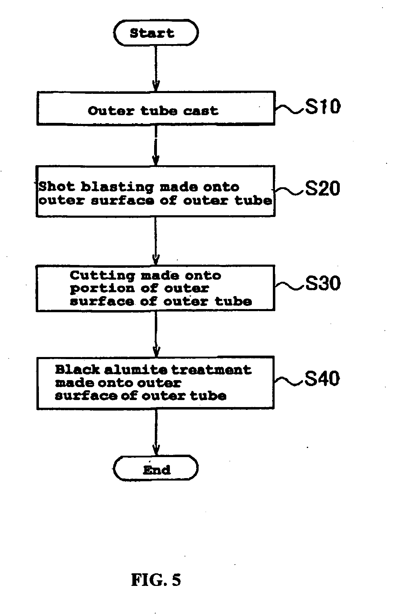

A manufacturing method for the front fork 40 forming the shock absorber of this embodiment discussed above will now be described. Specifically, with reference to FIG. 5, a manufacturing method for the outer tube 410L (410R) will be described.

As shown in FIG. 5, at a step S10, the outer tube 410L is cast.

At a step S20, shot blasting is performed on the outer surface of the outer tube 410L. Additionally, for shot blasting, for example, iron powder or silica sand can be used.

At a step S30, the process for obtaining luster in the part of the outer surface of the outer tube 410L is performed. Specifically, cutting, machining, etching or the like is performed on the small diameter sections 440L, 460L, and the small diameter sections 440L, 460L have less outer surface roughness than the large diameter sections 430L, 450L.

At a step S40, i.e., after cutting is made onto the small diameter sections 440L, 460L, the outer surface of the outer tube 410L is anodized. Specifically, the outer surface of the outer tube 410L is treated with black alumite.

In the front fork 40, the small diameter sections 440L, 460L have less outer surface roughness and more luster than the large diameter sections 430L, 450L. Also, the brake caliper attaching sections 431, 451 or the like to which the equipment of the motorcycle 10, such as the brake caliper 21a, is attached are provided on the large diameter sections 430L, 450L.

Therefore, the exterior that looks like a two-piece structure formed with the outer tube 410L and a separate bracket can be provided without using the separate bracket. Specifically, the large diameter sections 430L, 450L created the image or appearance of the separate bracket.

In the described embodiment, the front fork 40 is used as the normal stand type fork. The small diameter sections 440L, 460L of the outer tube 410L have more luster than the large diameter sections 430L, 450L, and can produce the image of the inner tube of the reverse stand type fork. That is, although using the normal stand type fork, the image or appearance of the reverse stand type fork can be produced.

As described above, shot blasting is performed on the outer surface of the large diameter sections 430L, 450L. Therefore, the large diameter sections 430L, 450L appear to have less luster than the small diameter sections 440L, 460L onto which the cutting is made. Also, cutting is made onto the outer surfaces of the small diameter sections 440L, 460L. Therefore, the small diameter sections 440L, 460L appear to have more luster than the large diameter sections 430L, 450L.

The small diameter sections 440L, 460L and the large diameter sections 430L, 450L neighbour each other in the longitudinal direction of the left side fork 400L. Also, the small diameter section 440L of the outer tube 410L is positioned between the large diameter section 450L that is the upper second part and the large diameter section 430L that is the lower second part. Further, the axles supporting section 420L is positioned lower than the large diameter section 430L. That is, the large diameter sections 430L, 450L can further produce the image or appearance that the sections 430L, 450L are separate from the small diameter sections 440L, 460L.

As described above, the outer surface of the outer tube 410L is anodized, specifically, black alumite treated. Therefore, the weather resistance of the outer tube 410L can be enhanced. Particularly, because black alumite treatment is provided, the so-called "darkness" that may happen to appear by making alumite treatment onto casting of an aluminum alloy can be inconspicuous.

### Other Embodiments

Although contents of the present invention are disclosed through one embodiment of the present invention as described above, it should be understood that the descriptions and drawings which are portions of the disclosure are exemplary and that the scope of the present invention is defined in the claims. Various alternatives are possible within this scope.

For example, it is not necessarily required that the outer surface of the outer tube 410L is anodized. Also, it is not always required that the outer surfaces of the large diameter sections 430L, 450L are subjected to shot blasting. Further, the outer surfaces of the small diameter sections 440L, 460L do not necessarily require a cutting work.

In addition, the small diameter sections 440L, 460L only require to be worked to have less outer surface roughness than the large diameter sections 430L, 450L. Any work other than cutting thus is also applicable.

Further, in the above embodiment, the small diameter section (for example, small diameter section 440L) and the large diameter section (for example, large diameter section 430L) neighbour each other. However, the small diameter sections and the large diameter sections only require to be provided in the longitudinal direction of the left fork 400L. A section, other than the small diameter sections and the large diameter sections, may be interposed therebetween.

As thus described, it is a matter of course that the present invention includes various embodiments or the like which are not described herein. Accordingly, the technical scope of the present invention is decided only by the invention specifying items according to the claims that are proper in light of the above descriptions.

### Description of Reference Numerals and Symbols

- 10:: motorcycle
- 20:: front wheel
- 20a:: axle
- 21:: front disk brake
- 21a:: brake caliper
- 22:: front fender
- 30:: vehicle frame
- 40:: front fork
- 50:: engine
- 70:: rear wheel
- 400L:: left side fork member
- 400R:: right side fork member
- 410L,410R:: outer tube
- 420L:: axle support section
- 430L:: large diameter section
- 431:: brake caliper attaching section
- 440L:: small diameter section
- 450L:: large diameter section
- 451:: brake caliper attaching section
- 452,453:: fender attaching section
- 460L:: small diameter section
- 470L,470R:: inner tube

## Claims

1. A shock absorber (40) comprising a cylindrical outer tube (410L) which includes first and second cylindrical parts (440L, 460L, 430L, 450L) which neighbour each other in a longitudinal direction of the outer tube (410L), **characterized in that:**
the first cylindrical part (440L, 460L) has an outer surface exhibiting a first surface roughness;
the second cylindrical part (430L, 450L) has an outer surface exhibiting a second surface roughness greater than the first surface roughness; and **in that**
the second part (430L, 450L) has an equipment attaching section (431, 451, 452, 453) adapted to permit a piece of equipment (21a, 22) to be attached thereto.

2. The shock absorber (40) according to Claim 1, wherein at least a portion of the outer surface of the second part (430L, 450L) is subjected to shot blasting treatment.

3. The shock absorber (40) according to Claim 1 or 2, wherein a cutting process is performed on at least a portion of the outer surface of the first part (440L, 460L).

4. The shock absorber (40) according to Claim 1, 2 or 3, wherein the equipment attaching section (431, 451) is adapted to permit a brake caliper (21a) of a disk type brake (21) to be attached thereto.

5. The shock absorber (40) according to any preceding Claim, wherein the equipment attaching section (452, 453) is adapted to permit a mud guard (22) to be attached thereto.

6. The shock absorber (40) according to any preceding Claim, wherein at least a portion of the outer surface of the outer tube (410L) is anodized.

7. The shock absorber (40) according to any preceding Claim, wherein at least a portion of the outer surface of the outer tube (410L) is treated with black alumite.

8. A manufacturing method for a shock absorber (40) having a cylindrical outer tube (410L), comprising:
a step of casting the outer tube (410L);
a step of shot blasting an outer surface of the outer tube (410L); and
a step of performing a cutting process on a portion of the outer surface of the outer tube (410L) thereby producing the image of separate sections.

9. The manufacturing method for a shock absorber (40) according to Claim 8 further comprising a step of anodizing at least a portion of the outer surface of the outer tube (410L).

10. The manufacturing method for a shock absorber (40) according to Claim 9, wherein the step of anodizing is performed after the step of cutting.

11. The manufacturing method for a shock absorber (40) according to Claim 8, 9 or 10, comprising the step of treating at least a portion of the outer surface of the outer tube (410L) with black alumite.

12. The manufacturing method for a shock absorber (40) according to any one of Claims 8 to 11, wherein at least a portion of the outer tube (410L) is formed with an equipment attaching section (431, 451, 542, 453) adapted to permit a piece of equipment (21a, 22) to be attached thereto.

13. The manufacturing method for a shock absorber (40) according to Claim 12, wherein the equipment attachment section (431, 451, 452, 453) is formed on a portion of the outer tube (410L) on which the cutting process is not performed.

14. A straddle type vehicle (10) having a shock absorber (40) according to any one of Claims 1 through 7.

15. The straddle-type vehicle (10) according to Claim 14, wherein
the shock absorber (40) includes an axle supporting section (420L) for supporting an axle (20a) of a front wheel (20);
the first cylindrical part (440L, 460L) of the outer tube (410L) is formed between an upper second part and a lower second part; and
the axle supporting section (420L) is positioned lower than the lower second part.

## Patentansprüche

1. Stoßdämpfer (40), der ein zylindrisches äußeres Rohr (410L) umfasst, das einen ersten und einen zweiten zylindrischen Teil (440L, 460L, 430L, 450L) einschließt, die einander in einer Längsrichtung des äußeren Rohres (410L) benachbart sind, **dadurch gekennzeichnet, dass:**
der erste zylindrische Teil (440L, 460L) eine Außenfläche hat, die eine erste Oberflächenrauheit zeigt,
der zweite zylindrische Teil (430L, 450L) eine Außenfläche hat, die eine zweite Oberflächenrauheit zeigt, die größer ist als die erste Oberflächenrauheit, und **dadurch**, dass
der zweite Teil (430L, 450L) eine Ausrüstungsbefestigungssektion (431, 451, 452, 453) hat, die dafür eingerichtet ist, zu ermöglichen, dass ein Ausrüstungsteil (21a, 22) daran befestigt wird.

2. Stoßdämpfer (40) nach Anspruch 1, wobei wenigstens ein Abschnitt der Außenfläche des zweiten Teils (430L, 450L) einer Reinigungsstrahlbehandlung unterworfen ist.

3. Stoßdämpfer (40) nach Anspruch 1 oder 2, wobei an wenigstens einem Abschnitt der Außenfläche des ersten Teils (440L, 460L) ein Schneidvorgang ausgeführt ist.

4. Stoßdämpfer (40) nach Anspruch 1, 2 oder 3, wobei die Ausrüstungsbefestigungssektion (431, 451) dafür eingerichtet ist, zu ermöglichen, dass ein Bremssattel (21a) einer Scheibenbremse (21) daran befestigt wird.

5. Stoßdämpfer (40) nach einem der vorhergehenden Ansprüche, wobei die Ausrüstungsbefestigungssektion (452, 453) dafür eingerichtet ist, zu ermöglichen, dass ein Schutzblech (22) daran befestigt wird.

6. Stoßdämpfer (40) nach einem der vorhergehenden Ansprüche, wobei wenigstens ein Abschnitt der Außenfläche des äußeren Rohres (410L) anodisiert ist.

7. Stoßdämpfer (40) nach einem der vorhergehenden Ansprüche, wobei wenigstens ein Abschnitt der Außenfläche des äußeren Rohres (410L) mit schwarzem Alumite behandelt ist.

8. Herstellungsverfahren für einen Stoßdämpfer (40), der ein zylindrisches äußeres Rohr (410L) umfasst, wobei das Verfahren Folgendes umfasst:
einen Schritt des Gießens des äußeren Rohres (410L),
einen Schritt des Reinigungsstrahlens einer Außenfläche des äußeren Rohres (410L) und
einen Schritt des Ausführens eines Schneidvorgangs an einem Abschnitt der Außenfläche des äußeren Rohres (410L), wodurch das Bild von gesonderten Sektionen erzeugt wird.

9. Herstellungsverfahren für einen Stoßdämpfer (40) nach Anspruch 8, das ferner einen Schritt des Anodisierens wenigstens eines Abschnitts der Außenfläche des äußeren Rohres (410L) umfasst.

10. Herstellungsverfahren für einen Stoßdämpfer (40) nach Anspruch 9, wobei der Schritt des Anodisierens nach dem Schritt des Schneidens ausgeführt wird.

11. Herstellungsverfahren für einen Stoßdämpfer (40) nach Anspruch 8, 9 oder 10, das den Schritt des Behandelns wenigstens eines Abschnitts der Außenfläche des äußeren Rohres (410L) mit schwarzem Alumite umfasst.

12. Herstellungsverfahren für einen Stoßdämpfer (40) nach einem der Ansprüche 8 bis 11, wobei wenigstens ein Abschnitt der Außenfläche des äußeren Rohres (410L) mit einer Ausrüstungsbefestigungssektion (431, 451, 452, 453) geformt ist, die dafür eingerichtet ist, zu ermöglichen, dass ein Ausrüstungsteil (21 a, 22) daran befestigt wird.

13. Herstellungsverfahren für einen Stoßdämpfer (40) nach Anspruch 12, wobei die Ausrüstungsbefestigungssektion (431, 451, 452, 453) an einem Abschnitt des äußeren Rohres (410L) geformt ist, an dem der Schneidvorgang nicht ausgeführt ist.

14. Reitsitz-Fahrzeug (10), das einen Stoßdämpfer (40) nach einem der Ansprüche 1 bis einschließlich 7 hat.

15. Reitsitz-Fahrzeug (10) nach Anspruch 14, wobei
der Stoßdämpfer (40) eine Achsenstützsektion (420L) zum Stützen einer Achse (20a) eines Vorderrades (20) einschließt,
der erste zylindrische Teil (440L, 460L) des äußeren Rohres (410L) zwischen einem oberen zweiten Teil und einem unteren zweiten Teil geformt ist und
die Achsenstützsektion (420L) tiefer angeordnet ist als der untere zweite Teil.

## Revendications

1. Amortisseur (40), comprenant un tube externe cylindrique (410L), englobant des première et deuxième parties cylindriques (440L, 460L, 430L, 450L) voisines les unes des autres dans une direction longitudinale du tube externe (410L), **caractérisé en ce que :**
la première partie cylindrique (440L, 460L) comporte une surface externe présentant une première rugosité de surface ;
la deuxième partie cylindrique (430L, 450L) comporte une surface externe présentant une deuxième rugosité de surface, supérieure à la première rugosité de surface ; et **en ce que**
la deuxième partie (430L, 450L) comporte une section de fixation d'un équipement (431, 451, 452, 453) adaptée pour permettre d'y fixer une pièce d'équipement (21a, 22).

2. Amortisseur (40) selon la revendication 1, dans lequel au moins une partie de la surface externe de la deuxième partie (430L, 450L) est soumise à un traitement par grenaillage.

3. Amortisseur (40) selon les revendications 1 ou 2, dans lequel un processus de coupe est exécuté sur au moins une partie de la surface externe de la première partie (440L, 460L).

4. Amortisseur (40) selon les revendications 1, 2 ou 3, dans lequel la section de fixation d'un équipement (431, 451) est adaptée pour permettre d'y fixer un étrier de frein (21a) d'un frein du type à disque (21).

5. Amortisseur (40) selon l'une quelconque des revendications précédentes, dans lequel la section de fixation d'un équipement (452, 453) est adaptée pour permettre d'y fixer un garde-boue (22).

6. Amortisseur (40) selon l'une quelconque des revendications précédentes, dans lequel au moins une partie de la surface externe du tube externe (410L) est anodisée.

7. Amortisseur (40) selon l'une quelconque des revendications précédentes, dans lequel au moins une partie de la surface externe du tube externe (410L) est traitée avec de l'alunite noire.

8. Procédé de fabrication d'un amortisseur (40), comportant un tube cylindrique externe (410L), comprenant :
une étape de coulée du tube externe (410L) ;
une étape de grenaillage d'une surface externe du tube externe (410L) ; et
une étape d'exécution d'un processus de coupe sur une partie de la surface externe du tube externe (410L), pour produire ainsi l'image de sections séparées.

9. Procédé de fabrication d'un amortisseur (40) selon la revendication 8, comprenant en outre une étape d'anodisation d'au moins une partie de la surface externe du tube externe (410L).

10. Procédé de fabrication d'un amortisseur (40) selon la revendication 9, dans lequel l'étape d'anodisation est exécutée après l'étape de coupe.

11. Procédé de fabrication d'un amortisseur (40) selon les revendications 8, 9 ou 10, comprenant l'étape de traitement d'au moins une partie de la surface externe du tube externe (410L) avec de l'alunite noire.

12. Procédé de fabrication d'un amortisseur (40) selon l'une quelconque des revendications 8 à 11, dans lequel au moins une partie du tube externe (410L) est formée avec une section de fixation d'un équipement (431, 451, 452, 453), adaptée pour permettre d'y fixer une pièce d'équipement (21a, 22).

13. Procédé de fabrication d'un amortisseur (40) selon la revendication 12, dans lequel la section de fixation d'un équipement (431, 451, 452, 453) est formée sur une partie du tube externe (410L) sur laquelle le processus de coupe n'est pas exécuté.

14. Véhicule du type enjambeur (10) comportant un amortisseur (40) selon l'une quelconque des revendications 1 à 7.

15. Véhicule du type enjambeur (10) selon la revendication 14, dans lequel
l'amortisseur (40) englobe une section de support d'un essieu (420L) pour supporter un essieu (20a) d'une roue avant (20) ;
la première partie cylindrique (440L, 460L) du tube externe (410L) est formée entre une deuxième partie supérieure et une deuxième partie inférieure ; et
la section de support de l'essieu (420L) est positionnée au niveau d'un point plus bas que la deuxième partie inférieure.
